# EUROPÄISCHE PATENTSCHRIFT

(11) **EP 2 436 166 B1**
(45) Veröffentlichungstag und Bekanntmachung des Hinweises auf die Patenterteilung: **23.03.2016**
(21) Anmeldenummer: 10736596.7
(22) Anmeldetag: 05.05.2010
(51) Int. Cl.: H04L 29/06

(54) **SERVICE INTERFACE**
SERVICE INTERFACE
INTERFACE DE SERVICE

(30) Priorität: 28.05.2009 DE 102009022977
(43) Veröffentlichungstag der Anmeldung: 04.04.2012
(73) Patentinhaber: Deutsche Telekom AG, 53113 Bonn (DE)
(72) Erfinder: ALBRECHT, Robert, Manfred, 27753 Delmenhorst (DE); BRANDT, Ronald, 28844 Weyhe (DE)
(74) Vertreter: 2K Patentanwälte Blasberg Kewitz & Reichel
(86) Internationale Anmeldenummer: PCT/DE2010/000437
(87) Internationale Veröffentlichungsnummer: WO 2010/136003

(56) Entgegenhaltungen:
- EP-A1- 1 594 276
- US-A1- 2005 198 380
- US-A1- 2006 031 929
- US-B1- 7 272 625
- Citrix Systems: "Citrix Access Gateway Enterprise Edition Administrator's Guide" 26. November 2008 (2008-11-26), XP002603390 Gefunden im Internet: URL:http://support.citrix.com/servlet/KbSe rvlet/download/18674-102-19409/AGEE_AdminG uide.pdf [gefunden am 2010-10-04] & CITRIX Document Download: 26. November 2008 (2008-11-26), Gefunden im Internet: URL:http://support.citrix.com/article/CTX1 19009 [gefunden am 2010-10-04]
- B. Komar, R. Beekelaar, J. Wettern: "Firewalls for Dummies" 2003, Wiley Publishing, Inc. , XP002603391 ISBN: 0-7645-4048-3 , Seiten 179-210 das ganze Dokument
- M .Chapple: "How will many firewalls serving as the default gateway affect the DMZ?" 30. Mai 2008 (2008-05-30), XP002603392 Gefunden im Internet: URL:http://searchsecurity.techtarget.com/e xpert/KnowledgebaseAnswer/0,289625,sid14_g ci1336945,00.html [gefunden am 2010-10-04]

## Beschreibung

Die Erfindung betrifft ein System zum Zulassen eines Zugriffs auf Dienste oder Rechner aus einem ersten lokalen Netzwerk in einem zweiten lokalen Netzwerk, wobei beide Netzwerke über ein gemeinsames Zwischennetz (DMZ) verbunden sind.

### Gebiet der Erfindung:

Im Bereich der Wartung von Rechnern und Software gibt es eine Vielzahl von Möglichkeiten, um auf ein lokales Netzwerk eines möglichen Kunden zurückzugreifen. In der Regel wird eine VPN Verbindung (virtual private Network) verwendet, bei der sich ein Benutzer auf einem Netzwerk über eine verschlüsselte Verbindung an der Firewall des Kundennetzwerkes einwählt, um dann dort auf die entsprechenden Ressourcen zuzugreifen. Dieser Ansatz hat jedoch eine Reihe von Nachteilen, da oftmals das virtuelle private Netzwerk keinen Restriktionen unterliegt, so dass ein Zugriff auf das gesamte Netzwerk besteht, und weiterhin besteht das Problem, dass die Firewall, die den VPN Zugriff bereitstellen soll, unmittelbar im Internet zugänglich sein muss.

Aufgabe der vorliegenden Erfindung ist, eine alternative Bereitstellung von Diensten für Anwender, die in einem ersten privaten Netzwerk arbeiten und die die Dienste in einem zweiten privaten Netzwerk benötigen. Ein solches Szenario kann gegeben sein, wenn ein Mitarbeiter, der bei der Firma A tätig ist jedoch bei der Firma B angestellt ist, seine E-Mails abrufen möchte, die in der Firma B gespeichert sind. Hierzu müsste er sich mit seinem Rechner normalerweise über eine VPN Verbindung in das Netzwerk der Firma B einwählen, um dann auf seinem Rechner die E-Mails lesen zu können. Dies setzt jedoch voraus, dass der Rechner, an dem er gerade arbeitet, auch die notwendige Clientsoftware installiert hat und die notwendigen Zugriffsrechte bzgl. der Firewall in Netzwerk A der Firma A besitzt.
Aus dem "Citrix Access Gateway Enterprise Edition Administrators's Guide" November 2008 ist die Konfiguration eines Access Gateways des entsprechenden Herstellers bekannt. Aus "Firewalls for Dummies" 2003 Wiley Publishing ist die Konfiguration von Firewalls bekannt. Die US 2005/198380A1 betrifft ebenfalls die Steuerung eines Netzwerkzugriffs.

### Überblick über die Erfindung:

Aufgabe der vorliegenden Erfindung ist die Bereitstellung eines Zuganges auf Dienste in einem ersten lokalen Netzwerk A von einem zweiten lokalen Netzwerk B, bei dem beide Netzwerke über eine Firewall gesichert sind, und wobei beide Netzwerke über ein zwischen den Firewalls angeordnetes Netz verbunden sind. Dabei sollen Zugriffsberechtigungen geklärt werden und die Beschränkung auf bestimmte Dienste erreicht werden.

Gelöst wird die Aufgabe durch ein Verfahren mit den Merkmalen der unabhängigen Ansprüche.

Zu beachten ist, dass ein Netzwerk A, das durch eine Firewall Fa gesichert ist, über ein Netzwerk Nab, in einer möglichen Ausführungsform als DMZ ausgebildet, mit einem Netzwerk B verbunden ist, das wiederum durch eine Firewall Fb gesichert ist. Im Detail handelt es sich um ein Netzwerk A, in dem ein Benutzer U1 mit seinem Computer C1 arbeitet. Dieser möchte auf das Netzwerk B zugreifen, damit er dort Dienste S1 nutzen kann. Ein möglicher Dienst S1 ist z. B. ein Zugriff auf den Mailserver oder den Terminserver. Andere Dienste sind denkbar, wie zum Beispiel Datei-Server, Datenbanken oder ähnliches.

Damit dies ermöglicht wird, meldet sich der Benutzer U1/C1 über eine geeignete Authentifizierung an der Firewall Fa an. In der bevorzugten Ausführungsform werden Smartcards verwendet. Anhand der Authentifizierung kann über eine Regel festgelegt werden, dass der Benutzer nur auf einen spezifischen Server SNab, innerhalb des Netzwerkes Nab, also innerhalb der DMZ, zugreifen kann. Dieser Server wird auch als Jump-Server bezeichnet und verwaltet Anwendungen. In einer bevorzugten Ausführungsform handelt es sich hierbei um einen Terminalserver oder einen Application Streaming-Server, wie er zum Beispiel von Citrix angeboten wird, oder um einen Unix/Linux Server, der Anwendungen verwaltet und bereitstellt. Die Anwendungen, wie zum Beispiel Mailprogramme, die auf diesem Server SNab arbeiten, gereifen wiederum, über die Firewall Fb auf das Netzwerk B zu, um die dort gespeicherten Daten abzurufen. Im Falle eines Mailservers, werden z. B. auf den Jump-Servern ein Outlook<(R)> Programm oder ein Lotus Notes<(R)> Client dem Benutzer zur Verfügung gestellt, damit dieser auf die Anwendungen zugreifen kann. Die persönlichen Maildaten befinden sich jedoch auf einem Mailserver, der im Netzwerk B arbeitet. Somit ist festzulegen, dass der Server SNab auch auf das Netzwerk B zugreifen kann. Dies wird dadurch erreicht, dass der Server SNab jedem Benutzer, der sich auf dem Server SNab eingewählt hat, eine eindeutige IP-Adresse zugeordnet wird. Hierzu bedarf es eines grossen Pools an IP-Adressen, der vorzugsweise aus dem Bereich der Privaten IP-Adressen gewählt wird. Es ist ebenfalls möglich, dass einem Benutzer mehrere IP-Adressen zugeordnet werden. In einem zentralen Verzeichnis (z. B. LDAP) werden dem Benutzer die IP-Adressen zugeordnet.

Nachdem der Benutzer sich am Server SNab authentifiziert hat und seine Anwendung gestartet hat, wird ihm eine eindeutige Adresse aus dem Pool der ihm zugeteilten Adressen zugewiesen. Mit dieser Adresse greift nun die Anwendung über die Firewall Fb auf das Netzwerk B zu. Die Firewall Fb erkennt anhand der IP-Adresse, um welchen Benutzer es sich handeln muss, und kann anhand von spezifischen Regeln feststellen, auf welche Server SNb der Benutzer im Netzwerk B zugreifen kann. So kann z. B. ein Benutzer, der lediglich E-Mails abrufen möchte, lediglich auf einen E-Mail-Server im Netzwerk B zugreifen. Anhand der IP Adresse kann die Firewall Fb nun über den Verzeichnisdienst Regeln abrufen, die festlegen, auf welchem Server SNb der Benutzer zugreifen kann. Es ist zu beachten, dass sich in einer weiteren Ausführungsform der Benutzer ebenfalls an der Firewall Fb authentifizieren muss.

In der bevorzugten Ausführungsform werden die Regeln in einem LDAP-verwaltet. Es handelt sich hierbei um ein Verzeichnis, das die Regeln und die Authentifizierung der Benutzer zentral verwaltet.

Ferner wird ein Ansatz mit einem Single Sign On in einer bevorzugten Ausführungsform gewählt. Hierbei meldet sich der Benutzer nur einmalig an beziehungsweise authentifiziert sich einmalig und kann dann auf unterschiedliche Services zugreifen ohne dabei jedes Mal erneut eine Authentifizierung durchführen zu müssen. Vielmehr erfolgt im Hintergrund eine Abfrage durch die Services, die überprüfen, ob die Person sich bereits in einem anderen zulässigen System korrekt angemeldet hat. Wenn der Ansatz des Single-sign-On nicht gewählt wird, so bedarf es in der Regel dreier Authentifizierungen. Die erste Authentifizierung erfolgt an der Firewall Fa, die zweite am Server Sab und die dritte an der Firewall Fb.

In einer bevorzugten Ausführungsform ist das Netzwerk in HP eine DMZ. Eine demilitarisierte Zone (DMZ, auch ent- oder demilitarisierte Zone) bezeichnet ein Computernetz mit sicherheitstechnisch kontrollierten Zugriffmöglichkeiten auf die daran angeschlossenen Server. Die in der DMZ aufgestellten Systeme werden durch eine oder mehrere Firewalls gegen andere Netze (z. B. Internet, LAN) abgeschirmt. Durch diese Trennung kann der Zugriff auf öffentlich erreichbare Dienste (Bastion Hosts mit z. B. E-Mail, WWW o. ä.) gestattet und gleichzeitig das interne Netz (LAN) vor unberechtigten Zugriffen geschützt werden.

Die Server in der DMZ greifen auf das Netzwerk B über eine gesicherte Verbindung auf die Server im Netzwerk B zu. In einer weiteren möglichen Ausführungsform wird die Verbindung zwischen dem Rechner des Benutzers und dem Server Sab ebenfalls verschlüsselte, wie auch die Verbindung des Servers Sab in das Netzwwerk B. Dies kann ab der Firewall Fa erfolgen oder bereits ab dem Rechner des Benutzers.

In einer alternativen Ausführungsform gibt es mehrere Firewalls Fa, Fal, .., Fan die redundant ausgelegt sind, damit jederzeit ein Zugriff auf einen Rechner in der DMZ erfolgen kann. So können auch unterschiedliche DMZ durch die Firewall angesprochen werden, wenn eine der DMZ nicht erreichbar ist beziehungsweise die Server innerhalb der DMZ nicht erreichbar sind. Sollte zum Beispiel eine DMZ in Europa angeordnet sein und die andere DMZ in den USA, und es stellt sich heraus, dass eine der beiden DMZ aufgefallen ist, schaltet die Firewall Fa automatisch um auf eine andere DMZ, in der in der Regel auch alternative Server (Jump-Server) stehen. Es ist auch denkbar, dass innerhalb einer DMZ mehrere der Jump-Server angeordnet sind, die je nach Auslastung angesprochen werden. Das Load-Balancing, das für eine sinnvolle Auslastung der Server steht, wird entweder durch ein vorgeschaltetes Proxy-System durchgeführt, das vor dem Server angeordnet ist, oder durch die Firewall selber, die die Anfragen nach einem bestimmten Algorithmus, zum Beispiel wie Round-Robin, weiterleitet. Bei der Verwendung von Citrix Servern können die Techniken zum Lastenausgleich verwendet werden, die vom Hersteller bereitgestellt werden.

### Figuren Beschreibung:

Im Folgenden werden die Figuren kurz beschrieben. Die Figuren und die folgende detaillierte Beschreibung der Figuren sollen keine Beschränkung der Erfindung darstellen:
fig. 1 zeigt den grundsätzlichen Aufbau der unterschiedlichen Netzwerke mit den Servern und den Benutzern;
fig. 2 zeigt eine Struktur eines redundanten Ansatzes der Jump-Server und der Firewalls.

### Detaillierte Beschreibung einer Ausführungsform

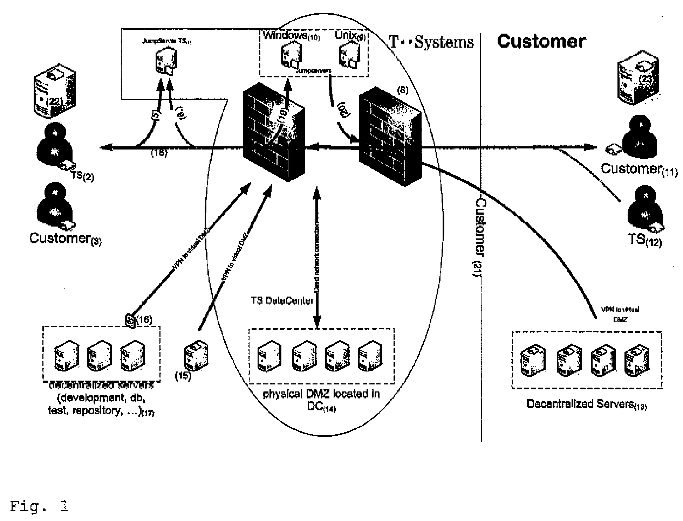

Die fig. 1 zeigt vor einer ersten Firewall 7, auch Fb genannt, einen Jump-Server 1, der es Benutzern 2 , 3 im Netzwerk B erlaubt, auf Anwendungen zuzugreifen. Der Jump-Server leitet dann die Anfragen weiter an die Server 16 oder den Server 15 . Bei dieser Konfiguration ist zu beachten, dass der Jump-Server nicht hinter der Firewall 7 angeordnet ist, sondern vor der Firewall. Dies ist eine grundsätzliche Ausnahme vom vorliegenden Ansatz.

Im VPN-Client kann im Einzelfall bei einem selektiven Split Tunnel der Split Tunnel aktiv sein.

Der Sprungserver streamt die Anwendung (überträgt die Programmdatei zuzüglich einiger Steuerdateien) auf den Computer des Anwenders. Dort wird sie innerhalb einer geschützten Umgebung (Sandbox, eine Art virtuelle Maschine) ausgeführt. Über die mit übertragenen Steuerdateien lassen sich die Kommunikationsmöglichkeiten der Anwendung beschränken. Dort wird geregelt, ob die Anwendung auf die lokalen Speichermedien zugreifen darf, ob eine Interaktion mit der Zwischenablage erlaubt ist, ob die Anwendungen auf andere Netzwerkressourcen zugreifen darf, ...

Da die Steuerdateien für jede Anwendung einzeln übertragen werden, ergibt sich die Möglichkeit, für jede einzelne Anwendung die Kommunikationsmöglichkeiten zu regeln: der sogenannten Selective Split Tunnel.

Bei einem Echter Split Tunnel verhält es sich anders.

Der VPN-Client beinhaltet die Möglichkeit den Split Tunnel bei Aufbau den VPN-Tunnels zu unterbinden. Im dem Moment des Tunnelaufbaus unterbindet der VPN-Client die Kommunikation mit allen Netzwerken ausser seinem eigenen Tunnel.

Diese Funktion des VPN-Clients wird über eine Steuerdatei, die auf der lokalen Festplatte des Anwender-PCs liegt gesteuert. Hierüber lässt sich der Split Tunnel an- oder abschalten.

Als weitere Funktion bietet der VPN-Client die Möglichkeit im Moment des Tunnelaufbaus die Konfiguration des Anwender-PCs auf bestimmte Merkmale zu überprüfen. Diese Merkmale können z. B. das Datei-Datum oder das vorhanden Sein einer bestimmten Datei oder deren Inhalt sein. Ebenso lässt sich die Anwesenheit von bestimmten Prozessen oder Registry-Schlüsseln prüfen.

Beim Tunnelaufbau wird der Inhalt der Steuerdatei zum An/Abschalten des Splittunnels geprüft. Erfüllt diese Datei nicht die Anforderungen, wird der Tunnel nicht erfolgreich aufgebaut. Damit kann auch ein Anwender mit administrativen Rechten den Tunnel nicht mit aktivem Split Tunnel aufbauen. Er könnte zwar den Inhalt der Steuerdatei verändern, der Tunnelaufbau würde dann aber scheitern.

Der Benutzer in Netzwerk B möchte auf eine Anwendung zugreifen, wie sie zum Beispiel ein Mail-Server 15, 16 sein kann. In einer ersten Alternative wird auf den Jump-Server 1 zugegriffen, der die gleiche Funktionalität hat, wie die Jump-Server 10 und 9, die jedoch in der DMZ hinter der Firewall 7 angeordnet sind. Der Jump-Server leitet dann die Anfrage weiter über eine virtuelle verschlüsselte Verbindung (VPN) an die Server 16 , 15 , 14 , 13 . Erfolgt die Umleitung über einen Jump-Server, der zwischen der Firewall 7 und 8 angeordnet ist, so werden die Informationen 18 an die Firewall 7 weitergeleitet, dort findet eine Authentifizierung statt. Anhand der Informationen, die für die Authentifizierung hinterlegt sind, wie Regeln und Zugriffsrechte, wird die Anfrage weitergeleitet an die Jump-Server. Eine Authentifizierung am Jump-Server 10 , 9 erfolgt dann entweder erneut explizit oder durch einen Single-sign-on-Ansatz. Dieser kann durch unterschiedliche Ansätze erfolgen, gegebenenfalls auch durch ein Verzeichnisdienst (LDAP). Nachdem nun eine Verbindung mit diesem Jump-Server aufgebaut wurde, werden die Anfragen 19 entweder über die Firewall 8 oder 7 auf entsprechende Server 16 , 15 , 14 und 13 umgeleitet, wobei hierfür eindeutige IP Adressen verwendet werden, die vom JumpServer dem Benutzer zugewiesen wurden. Jeder Benutzer hat eine eindeutige, beziehungsweise eine Gruppe von eindeutigen IP-Adressen, die Rückschlüsse auf die Identität des Benutzers zulassen. Diese IP-Adressen sind z. B. im LDAP abgelegt. Durch die Verwendung dieser eindeutigen IP-Adressen auf dem Jump-Server erfolgt dann ein Zugriff auf die Server 13 - 16 . Für den Zugriff auf den Server 13 muss die Firewall 8 Fa durchlaufen werden, die anhand der IP-Adresse und weiterer Autorisierungsinformationen erkennt, um welchen Benutzer es sich handelt. Anhand eines Regelwerks 20 wird nun festgelegt, auf welchen Server 13 ein Zugriff im Netzwerk A erfolgen kann. Der gleiche Ansatz kann auch vom Netzwerk A heraus durch die Benutzer 11 und 12 erfolgen. Das Netzwerk A hat weiterhin einen lokalen Server 23, der nicht in den Zugriff eingebunden ist.

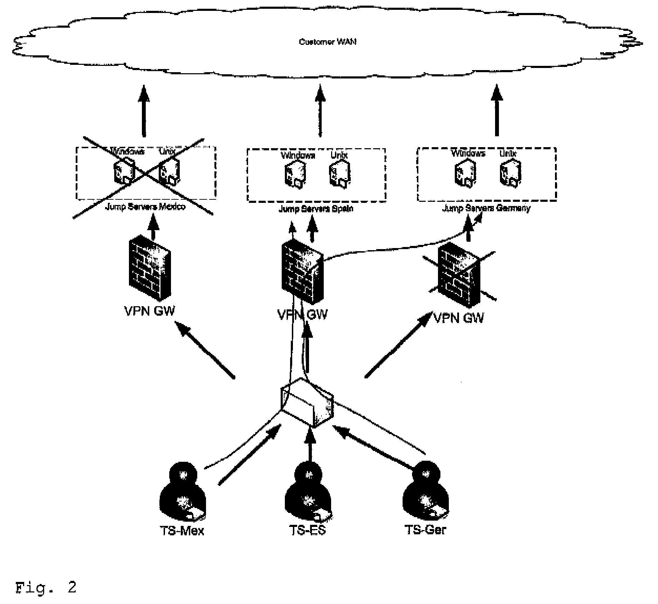

Die fig. 2 zeigt einen redundanten Ansatz. Hierbei gibt es eine Reihe von Firewalls, die jeweils einen Zugriff auf einen Jump-Server erlauben. Falls einer der Server oder die Firewall ausfallen, erfolgt eine Umleitung der Anfragen entweder über eine andere Firewall oder auf einen anderen Jump-Server in den entspre chenden Ländern, so dass eine Redundanz gegeben ist.

**Bezugszeichenliste**

| | |
|---|---|
| 1 | Jump-Server |
| 2 | Benutzer in Netzwerk B |
| 3 | Benutzer in Netzwerk B |
| 5 | Split Tunnel exception, |
| 6 | SSL-Tunnel |
| 7 | T-Systems Firewall / VPN gateway |
| 8 | Firewall A |
| 9 | Jump-Server Unix |
| 10 | Jump-Server Windows |
| 11 | Benutzter in Netzwerk A |
| 12 | Benutzer in Netzwerk A |
| 13 | Dezentralisierte DMZ am Ort A |
| 14 | Physikalsische DMZ |
| 15 | Single Server VPN |
| 16 | Decentralized DMZ am Ort B |
| 17 | |
| 18 | Direkte IP-Verbindung |
| 19 | Eingangs filter zu Jump-Server |
| 20 | Ausgangsfilter filter vom Jump-Server |
| 21 | Abgrenzung zwischen Ort A und Ort B |
| 22 | Server am Ort B |
| 23 | Server am Ort A |

## Patentansprüche

1. verfahren zum sicheren Zugriff eines Benutzers U1 mit seinem Computer Cl in einem ersten lokalen Netzwerk A auf digitale Dienste (13, 15, 16) in einem zweiten lokalen Netzwerk B , wobei beide Netzwerke über eine Firewall (7, 8) gesichert sind, und wobei beide Netzwerke über ein zwischen den Firewalls angeordnetes Netz Nab verbunden sind, umfassend die Schritte:
- Authentifizieren des Benutzers U1 an der ersten Firewall (7,8);
- Anhand der Authentifizierung wird über eine Regel festgelegt, dass der Benutzer U1 auf einen spezifischen Jump-Server (13, 15, 16), innerhalb des Netzwerkes Nab , zugreifen kann;
- Zugriff auf den Jump-Server (9,10) und Authentifizieren des Benutzers U1 am Jump-Server (9, 10), sowie Zuteilen einer eindeutigen IP-Adresse in Abhängigkeit der Authentifizierung;
- Zugriff auf den Dienst (13, 15, 16) im zweiten Netzwerk B über den Jump-Server (9, 10) , wobei eine Authentifizierung über die IP-Adresse an der zweiten Firewall (7, 8) erfolgt;
- Bestimmen einer Regel auf der zweiten Firewall (7, 8) anhand der IP-Adresse, um zu überprüfen, ob ein Zugriff auf den Dienst (13, 15, 16) erlaubt ist, falls dieser erlaubt ist, Durchleiten der Anfrage vom Jump-Server (9, 10) in das zweite Netzwerk B an den Dienst (13, 15, 16).

2. Das Verfahren nach dem vorhergehenden Anspruch, wobei einem Benutzer eine oder mehrere IP-Adressen eindeutig zugeordnet sind, die durch den JumpServer verwendet werden.

3. Das Verfahren nach einem oder mehreren der vorhergehenden Ansprüche, wobei die Regeln und/oder die IP-Adressen für einen Benutzer in einem zentralen Verzeichnis, wie Ldap abgelegt werden.

4. Das Verfahren nach einem oder mehreren der vorhergehenden Anspruche, wobei ein Single-Sign-On-Verfahren verwendet wird, um sich an der ersten Firewall, der zweiten Firewall und/oder dem Jump-Server zu authentifizieren.

5. Das Verfahren nach einem oder mehreren der vorhergehenden Ansprüche, wobei das Netzwerk Nab ein eine demilitarisierte Zone ,DMZ, ist.

6. Das Verfahren nach einem oder mehreren der vorhergehenden Ansprüche, wobei die Verbindungen zwischen Firewall, Jump-server und Services verschlüsselt sind

7. Das Verfahren nach einem oder mehreren der vorhergehenden Ansprüche, wobei es mehrere Firewalle gibt, die für eine Redundanz ausgelegt sind, damit jederzeit ein Zugriff auf einen Jump-Server in einer oder mehrer DMZ erfolgen kann.

8. Das Verfahren nach einem oder mehreren der vorhergehenden Ansprüche, wobei unterschiedliche DMZ durch die Firewall angesprochen werden, wenn einer der DMZ nicht erreichbar ist beziehungsweise die Server innerhalb der DMZ nicht erreichbar sind.

9. Das Verfahren nach einem oder mehreren der vorhergehenden Ansprüche, wobei ein Load-Balancing für mehrere Jump-Server erfolgt, so dass eine einseitige Überlastung der Jump-Server vermieden wird.

## Claims

1. A method for secure access by a user U1 with his/her computer C1 in a first local network A to digital services (13, 15, 16) in a second local network B, wherein both networks are secured via a firewall (7, 8), and wherein both networks are connected via a network Nab arranged between the firewalls, comprising the steps of:
- Authenticating of the user U1 at the first firewall (7, 8);
- With the authentication it is determined by a rule that the user U1 may access a specific jump server (13, 15, 16) within the network Nab;
- Accessing the jump server (9, 10) and authenticating of the user U1 at the jump server (9, 10), and assigning of an unique IP address in dependence of the authentication;
- Accessing the service (13, 15, 16) in the second network B via the jump server (9, 10), wherein an authentication of the IP address on the second firewall (7, 8) takes place;
- Determining a rule on the second firewall (7, 8) on the basis of the IP address to verify whether an access to the service (13, 15, 16) is allowed, if an access is allowed, passing the request from the jump server (9, 10) into the second network B to the service (13, 15, 16).

2. The method according to the preceding claim, wherein one or more IP addresses which are used by the jump server are uniquely assigned to a user.

3. The method according to one or more of the preceding claims, wherein the rules and / or the IP addresses for a user are stored in a central directory such as LDAP.

4. The method according to one or more of the preceding claims, wherein a single-sign-on-method is used to authenticate to the first firewall and the second firewall and / or the jump server.

5. The method according to one or more of the preceding claims, wherein the network Nab is a demilitarized zone, DMZ.

6. The method according to one or more of the preceding claims, wherein the connections between the firewall, jump server and services are encrypted.

7. The method according to one or more of the preceding claims, wherein there is a plurality of firewalls, which are designed for redundancy, so that at any time access can be made to a jump server in one or more DMZ.

8. The method according to one or more of the preceding claims, wherein different DMZ are addressed by the firewall, if any of the DMZ is not reachable or the servers within the DMZ are not reachable.

9. The method according to one or more of the preceding claims, wherein a load balancing for a plurality of jump server takes place, so that a one-sided overload of the jump servers is avoided.

## Revendications

1. Un procédé permettant à un utilisateur U1 d'accéder de façon sécurisée à son ordinateur C1 au sein d'un premier réseau local A, pour des services numériques (13, 15, 16) au sein d'un second réseau local B, dans lequel les deux réseaux sont sécurisés au moyen d'un pare-feu (7, 8), et dans lequel les deux réseaux sont connectés via un Nab de réseau disposés entre les pare-feux, comprenant les étapes :
- authentification de l'utilisateur U1 au niveau du premier pare-feu (7, 8) ;
- détermination, suite à l'authentification, au moyen d'une règle que l'utilisateur U1 est autorisé à accédé à un serveur de saut spécifique (13, 15, 16) au sein du Nab de réseau ;
- accès au serveur de saut (9, 10) et authentification de l'utilisateur U1 au niveau du serveur de saut (9 10), et affectation d'une unique adresse IP dépendant de l'authentification ;
- accès au service (13, 15, 16) au sein du second réseau B via le serveur de saut (9, 10), dans lequel intervient une authentification de l'adresse IP sur le second pare-feu (7, 8) ;
- détermination d'une règle sur le second pare-feu (7, 8) sur la base de l'adresse IP pour vérifier que l'accès au service (13, 15, 16) peut être autorisé, si un accès est autorisé, la transmission de la requête du serveur de saut (9, 10) au service (13, 15, 16) au sein du second réseau B.

2. Le procédé selon la revendication précédente, dans lequel une ou plusieurs adresses IP utilisées par le serveur de saut sont affectées de manière unique à un utilisateur.

3. Le procédé selon une ou plusieurs des revendications précédentes, dans lequel les règles et/ou les adresses IP affectées à un utilisateur sont stockée au sein d'un répertoire central, tel que LPAD.

4. Le procédé selon une ou plusieurs des revendications précédentes, dans lequel un procédé d'enregistrement unique est utilisé pour l'authentification au premier pare-feu et au second pare-feu et/ou au serveur de saut.

5. Le procédé selon une ou plusieurs des revendications précédentes, dans lequel le réseau Nab est une zone démilitarisée, DMZ.

6. Le procédé selon une ou plusieurs des revendications précédentes, dans lequel les connexions entre le pare-feu, le serveur de saut et les services sont chiffrées.

7. Le procédé selon une ou plusieurs des revendications précédentes, dans lequel il y a une pluralité de pare-feux, qui sont conçus dans un esprit de redondance, de façon à ce que, à tout moment, l'accès peut être réalisé à un serveur de saut dans une ou plusieurs DMZ.

8. Le procédé selon une ou plusieurs des revendications précédentes, dans lequel différentes DMZ sont adressées par le pare-feu, si l'une quelconque des DMZ n'est pas atteignable ou si les serveurs qui sont au sein de la DMZ ne peuvent être atteints.

9. Le procédé selon une ou plusieurs des revendications précédentes, dans lequel un équilibrage de charge intervient pour une pluralité de serveur de saut, de façon à éviter que ne se produise une surcharge d'un seul côté des serveurs de saut.
